# EUROPEAN PATENT SPECIFICATION

(11) **EP 2 243 746 B1**
(45) Date of publication and mention of the grant of the patent: **01.04.2015**
(21) Application number: 10004192.0
(22) Date of filing: 20.04.2010
(51) Int. Cl.: C02F 1/44, B01D 71/80, B01D 67/00, B01D 69/10, B01D 69/14

(54) **Water purifying filter and method for fabricating the same**
Wasserreinigungsfilter und Herstellungsverfahren dafür
Filtre de purification d'eau et son procédé de fabrication

(30) Priority: 22.04.2009 KR 20090035001; 22.09.2009 KR 20090089463
(43) Date of publication of application: 27.10.2010
(73) Proprietor: LG ELECTRONICS INC., Yeongdeungpo-gu Seoul 150-721 (KR)
(72) Inventor: Kim, Sang Hoon, Seocho-gu Seoul 137-724 (KR); Hong, Hyung Ki, Seocho-gu Seoul 137-724 (KR); Han, Sung Su, Seocho-gu Seoul 137-724 (KR)
(74) Representative: Katérle, Axel

(56) References cited:
- EP-A1- 1 721 657
- WO-A2-2006/122566
- WO-A2-2009/003936
- DE-A1-102006 025 344
- US-A1- 2003 100 019
- US-A1- 2004 049 230

## Description

### BACKGROUND OF THE DISCLOSURE

### Field of the Disclosure

The present invention relates to a water purifying filter and a method for fabricating the same.

### Discussion of the Related Art

Though water is the most essential resource the human-being can not dispense with, the U.N. predicts that about 2.7 billion people will confront with shortage of fresh water by 2025 due to increased population and rapid increase of industrial water consumption, and 1/5 of countries in the world experience serious water shortage.

The problem of water pollution becomes serious due to acceleration of industrialization and urbanization, and according to the World Water Forum, 1.1 billion people fail to drink safe water, and 5 million people die every year from water-borne diseases, presently.

In order to solve the water shortage problem, there have been researches for development of a water purifying filter that can purify polluted water into potable water.

In the case of a related art reverse osmosis (RO) type filter which can filter all impurities, a pressure higher than an osmosis pressure is applied to polluted water or a high concentration solution to make water therein to move to a side of a low concentration solution for purifying the water.

The RO type filter is provided with a supporting substrate formed on non-woven fabric, and polyamide which is an active layer is formed on the supporting substrate by interfacial polymerization reaction for removing pollutants.

The RO type consumes electric energy for applying the pressure higher than the osmosis pressure to the polluted water and requires a storage tank for collecting water as the RO type has a low water permeability.

Document WO 2006/122566 A2 discloses a water membrane comprising a sandwich construction having at least two permeable support layers separated by at least one lipid bilayer comprising functional aquaporin water channels, wherein the support layer comprises a hydrophobic perforated material which forms the contact surface with the lipid monolayers and wherein the lipid bilayer is formed in the perforations of the hydrophobic perforated material. The size of the perforations in the hydrophobic material is to ensure that stable bilayers of amphiphilic lipids can be formed in the perforations, so it is in the nm, µm or mm range. The permeable or porous support is prepared by a track-etch technique, wherein pores are created by etching the tracks created by collimated fission fragments from a Californium 252 source with a hydrofluoric acid solution. The pore radius is determined by the etching time, temperature and concentration of the aqueous hydrofluoric acid bath. The water membrane is enclosed in a stabilizing permeable or porous membrane which is rigid and serves as a protection of the water membrane.

Document US 2004/049230 A1 describes biomimetric membranes using aquaporin of proteins incorporated into block polymer membranes to produce stable films, which only pass water, thus facilitating water purification. The membrane has the form of a filter disk. To fabricate such a disk, a 5 nm thick monolayer of synthetic triblock copolymer and protein is deposited on the surface of a 25 mm commercial ultrafiltration disk. Lastly, a 220 nm pore size PVDF membrane is epoxy glued to the disk surface to ensure safe handling.

### SUMMARY OF THE DISCLOSURE

Accordingly, the present invention is directed to a water purifying filter and a method for fabricating the same that substantially obviates one or more problems due to limitations and disadvantages of the related art.

Additional advantages, objects, and features of the disclosure will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a water purifying filter defined in claim 1.

In another aspect of the present invention, there is provided a method defined in claim 7.

It is to be understood that both the foregoing general description and the following detailed description of the present invention are exemplary and explanatory and are intended to provide further explanation of the invention as claimed.

### BRIEF DESCRIPTION OF THE DRAWINGS

In the drawings:
FIG. 1 illustrates a diagram of aquaporin incorporated in a lipid bi-layer according to an embodiment of the present invention;
FIGS. 2A to 2C illustrate sections showing the steps of a first method for fabricating a water purifying filter using aquaporin, according to the present invention;
FIG. 3 illustrates a vesicle of aquaporin incorporated in a lipid bi-layer or a block copolymer according to the present invention;
FIGS. 4A to 4D illustrate sections showing the steps of a second method for fabricating a water purifying filter of aquaporin;
FIGS. 5A to 5D illustrate sections showing the steps of a third method for fabricating a water purifying filter of aquaporin;
FIGS. 6A to 6D illustrate sections showing the steps of a fourth method for fabricating a water purifying filter of aquaporin;
FIGS. 7A to 7I illustrate sections showing the steps of a fifth method for fabricating a water purifying filter of aquaporin;
FIGS. 8A to 8G illustrate sections showing the steps of a sixth method for fabricating a water purifying filter of aquaporin; and
FIGS. 9A and 9B illustrate sections showing an example of the steps of a method for fabricating a water purifying filter of an SAM substance.

### DESCRIPTION OF SPECIFIC EMBODIMENTS

Reference will now be made in detail to the accompanying drawings. Wherever possible, the same reference numbers will be used throughout the drawings to refer to the same or like parts.

In the meantime, it is required to understand that, in a case of description that a layer, a film, a region, a plate, or the like part is formed or positioned "on" other part, the description implies, not only a case the part is formed right on the other part in direct contact thereto, but also a case another part exists between the parts.

The water purifying filter and a method for fabricating the same of the present invention will be described.

In order to help understanding of the present invention and convenience of description, a water purifying filter of membrane protein of an aquaporin group or an SAM (self assembled monolayer) will be described as an example.

In the present application, a water purifying filter membrane can be fabricated by forming different patterns on a thin substrate. For fabrication of the membrane, the polymer pattern transcription technology or the track back etch technology can be used. However, the track back etch technology has disadvantage in that an overall cost for fabrication of the water purifying filter increases due to the great difficulty of formation of a few nanometer to a few tens of nanometer holes in very thin substrate at fixed intervals, the very complicate steps required for formation of nanometer sized pores, and the requirement for a semiconductor process which requires a high cost. Accordingly, this description will describe the present invention taking a method in which the nanometer sized pores are formed on a substrate by using the polymer pattern transcription technology easily, and the membrane is formed by using the membrane protein of the aquaporin group or the SAM as an example. The membrane produced thus can be modularized in different types for fabrication of adaptive filters.

Various embodiments of a membrane formation process for fabrication of the water purifying filter will be described with reference to the drawings attached hereto.

A method for forming a membrane of membrane protein of the aquaporin group will be described. At first, the aquaporin will be described.

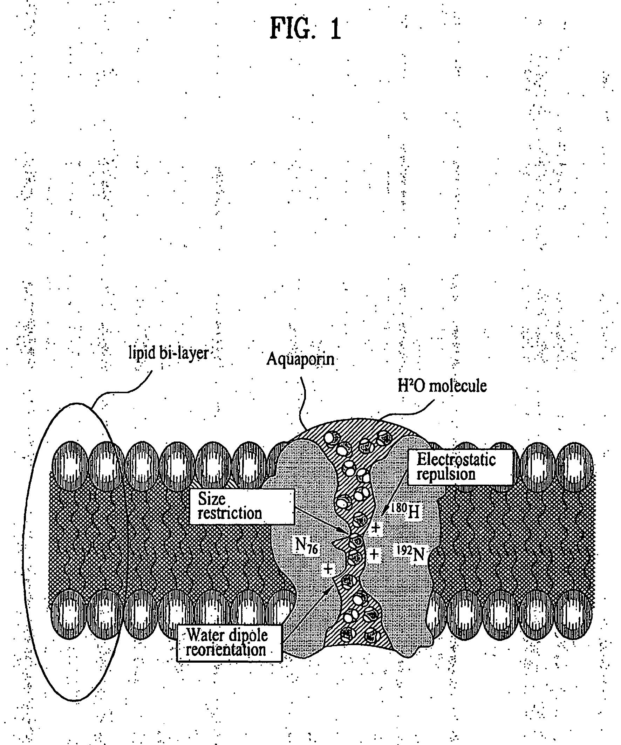

FIG. 1 illustrates a diagram of aquaporin incorporated in a lipid bi-layer in accordance with a preferred embodiment of the present invention.

The aquaporin not only excludes pass of all pollutants, such as bacteria, virus, mineral, salt, and so on, but allows pass of water owing to a structural characteristic thereof.

The aquaporin is membrane protein having around 300 amino acid and a cell symmetric with respect to an inside to and outside thereof. Especially, the aquaporin has a very small sand glass shaped center portion. For an example, the smallest portion of the center portion of the aquaporin has a size of about 3Å which is slightly greater than a water molecule H₂O having a size of 2.8Å. Accordingly, an aquaporin NPA box having two alanines arranged in a water passage in parallel blocks pass of a hydrogen ion H⁺, but allows pass of the water molecule H₂O, only.

Thus, the aquaporin interferes with pass of other ion or solute, but induces in/out of the water molecule, selectively. Owing to such a characteristic, the aquaporin is also called a water channel.

The aquaporin has six transmembrane α-helices arranged in a clockwise direction, having amino acid and carboxy extremities on a cytoplasm side surface of the membrane. The amino acid and the carboxy half show similarity to a tandem repeat.

The aquaporin has five A ~ E interhelical loops on outside and inside of the cell, wherein the loops B and E maintain Asn-Pro-Ala NPA motif, though it is inadequate as a hydrophobia, to form a three dimensional sand glass shape, allowing the water to pass therethrough. There are the NPA motif and a selectivity filter or an ar/R selectivity filter which are smaller than the NPA motif.

The aquaporin passes water and uncharged solute, such as glycerol, carbon dioxide CO₂, ammonia, urea, and so on depending on a size of a gap.

The aquaporin differs with peptide sequences which change a hole size in the protein. The hole size is influenced to a size of the molecule which passes therethrough. However, a water pore shows no permeability to a charged molecule, i.e., a proton or particles having an electro-chemical characteristic.

Since movement of the water is symmetric in the aquaporin, allows moving in any direction, and needs no energy consumption, such movement can be a great advantage for a production of a water filter of the aquaporin. However, in relation to the present invention, for applying the aquaporin to a water purifying filter actually to use the aquaporin as the water purifying filter which selectively passes water only, endurance of the aquaporin against water pressure is very important.

In a case vesicles may be formed by incorporating the aquaporin in block copolymers to construct a three dimensional structure simply, and in another case monolayer of the lipid bi-layer is formed for fabrication of two dimensional planer type water purifying filter. However, since the three dimensional structure requires large amounts of the aquaporins and the block copolymers, extending moving passages of the water, a permeation rate of the water becomes poor. Moreover, the two dimensional planer type has problems of endurance of the aquaporin against to the water pressure and requirement of a much fabrication time period for mixing by using vesicle fusion technology.

Accordingly, micro or nano patterns are formed on a surface of the support layer or support substrate of the water purifying filter so that the micro or nano patterns do not take entire pressure directly in fabrication of the water purifying filter for improving the endurance compared to the planer type, making the fabrication time period short and improving an anti-fouling characteristic. The water purifying filter can reduce the amount of the block copolymers used for fabrication compared to the three dimensional structure, and increase the permeation rate owing to the short water moving passage.

A process for formation of a membrane by using the membrane protein of the aquaporin group, and fabricating the water purifying filter of the membrane formed thus will be described. However, the membrane can be modulized in different type of modules for fabrication of the water purifying filter as required.

### <FIRST METHOD>

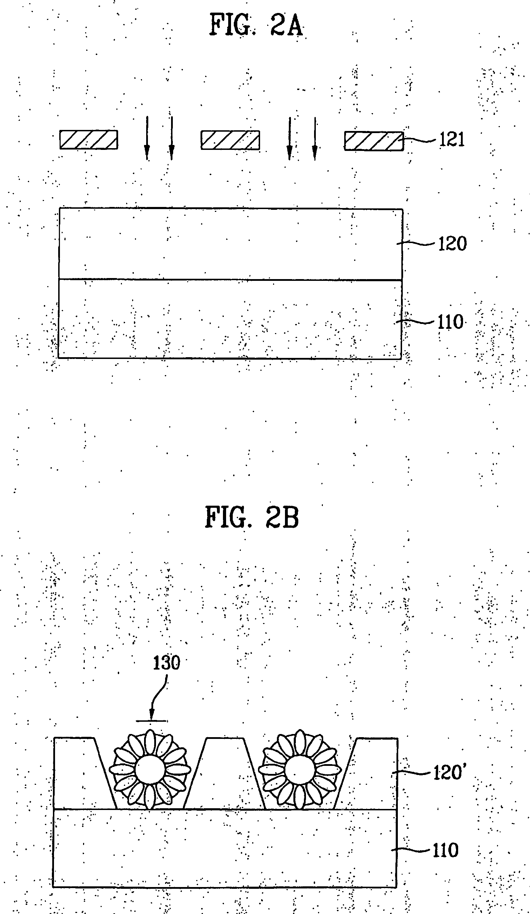

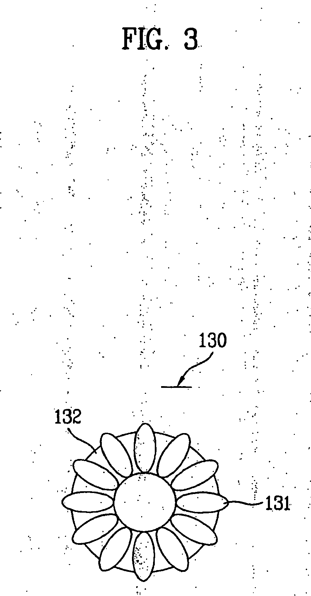

FIGS. 2A to 2C illustrate sections showing the steps of a first method for fabricating a water purifying filter using aquaporin according to an embodiment of the present invention. FIG. 3 illustrates a vesicle of aquaporin incorporated in a lipid bi-layer or a block copolymer according to the embodiment of the present invention.

Referring to FIG. 2A, the steps of the first method for fabricating a water purifying filter according to the embodiment of the present invention include coating a polymer substance 120 on a support substrate 110, positioning a mask 121 on the polymer substance, and subjecting the support substrate 110 to exposure and development to form polymer pattern 120' having at least one intaglio in the polymer substance 120. Though not shown in FIG. 2A, the polymer pattern 120' may be formed by molding.

The support substrate 110 can be constructed of an ultrafiltration or microfiltration containing a polymer group substance such as polysulfone or Teflon having pores, or formed of ceramic, metal, or carbon other than the polymer group.

The intaglio may be of a two dimensional hole or one dimensional grid pattern. In this instance, if the intaglio has the two dimensional hole pattern, an interval of the intaglio can be 20nm to 10µm, and the hole may have a size of 5 to 200nm. If the intaglio has the one dimensional grid pattern, the intaglio can have a step of 20nm to 500µm, with an interval of 20nm to 500µm and a line width of 10 to 250µm.

Then, referring to FIG. 2B, a solution containing vesicles 130 of membrane protein of the aquaporin group is injected into the intaglio in the polymer pattern 120', and dried. In this instance, the membrane protein of the aquaporin group can be membrane protein selected from at least one of groups of the aquaporin 1 ~ 12, aquaporin-Z, and aquaporin-M. The intaglio has a slope such that the intaglio has a shape which has a small bottom side and a great upper side for preventing the vesicles 130 from passing through.

Referring to FIG. 3, the aquaporin vesicle 130 of the present invention is a vesicle having the aquaporins 131 incorporated in a lipid bi-layer 132 or a block copolymer 132. The block copolymer 132 can be at least one polymer group selected from Poly (ethylene oxide), Poly (ethylene propylene), Poly (2-methyloxazoline), Poly (propylene sulfide), and Poly (dimethylsiloxane).

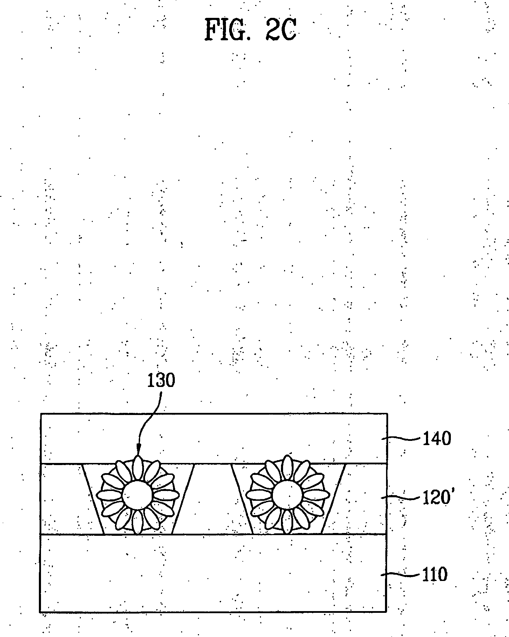

Finally, referring to FIG. 2C, a protective layer 140 of a hydrophilic polymer group is formed on the polymer pattern 120' having the aquaporin vesicles 130 injected therein.

### <SECOND METHOD>

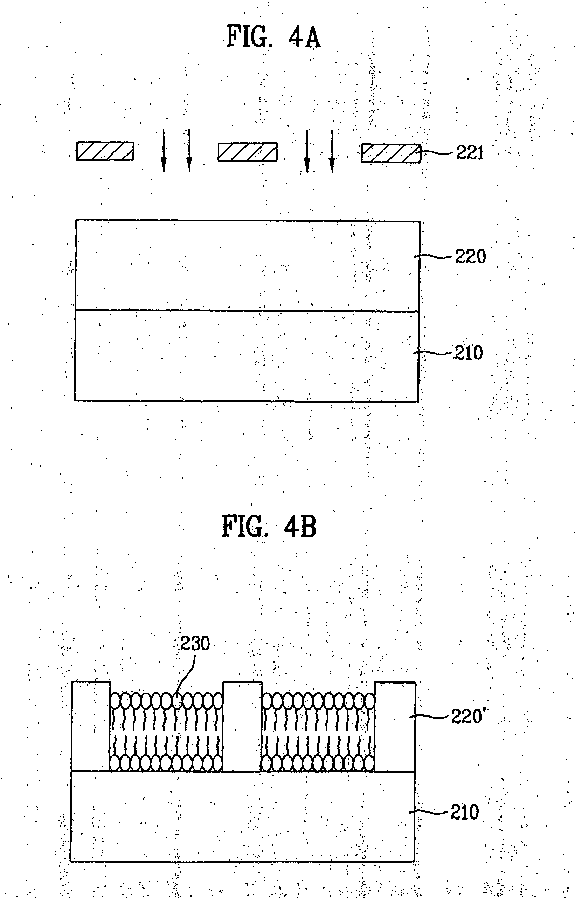

FIGS. 4A to 4D illustrate sections showing the steps of a second method for fabricating a water purifying filter of aquaporin.

Referring to FIG. 4A, the steps of the second method for fabricating a water purifying filter include coating a polymer substance 220 on a support substrate 210, positioning a mask 221 on the polymer substance 220, and subjecting the support substrate 210 to exposure and development to form at least one polymer pattern 220' having at least one intaglio in the polymer substance 220. Though not shown in FIG. 4A, the polymer pattern 220 may be formed by molding.

The support substrate 210 can be constructed of an ultrafiltration or microfilteration containing a polymer group substance such as polysulfone or Teflon having pores, or formed of ceramic, metal, or carbon other than the polymer group.

The intaglio may be of a two dimensional hole or one dimensional grid pattern. In this instance, if the intaglio has the two dimensional hole pattern, an interval of the intaglio can be 20nm to 10µm, and the hole may have a size of 5 to 200nm. If the intaglio in the polymer pattern 220 has the one dimensional grid pattern, the intaglio can have a step of 20nm to 500µm, with an interval of 20nm to 500µm and a line width of 10 to 250µm.

Then, referring to FIG. 4B, a lipid bi-layer 230 or a block copolymer 230 is coated in the intaglio. FIG. 4B illustrates the lipid bi-layer 230 coated in the intaglio.

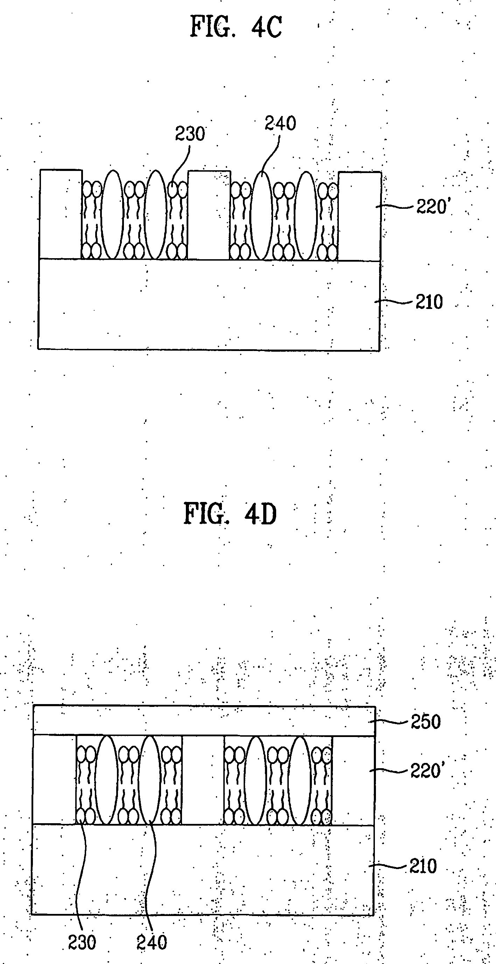

Next, referring to FIG. 4C, the aquaporin 240 is coated in the intaglio having the lipid bi-layer 230 or the block copolymer 230 coated therein.

Finally, referring to FIG. 4D, a protective layer 250 of a hydrophilic polymer group is formed on the polymer pattern 220' having the aquaporin 240 coated thereon.

Thus, the second method can shorten a fabrication process time period by injecting the aquaporin 240 into the intaglio after coating the lipid bi-layer or the block copolymer 230 in the intaglio in the polymer pattern instead of incorporation of the aquaporin vesicles 130 in the lipid bi-layer or block copolymer in the first method.

### <THIRD METHOD>

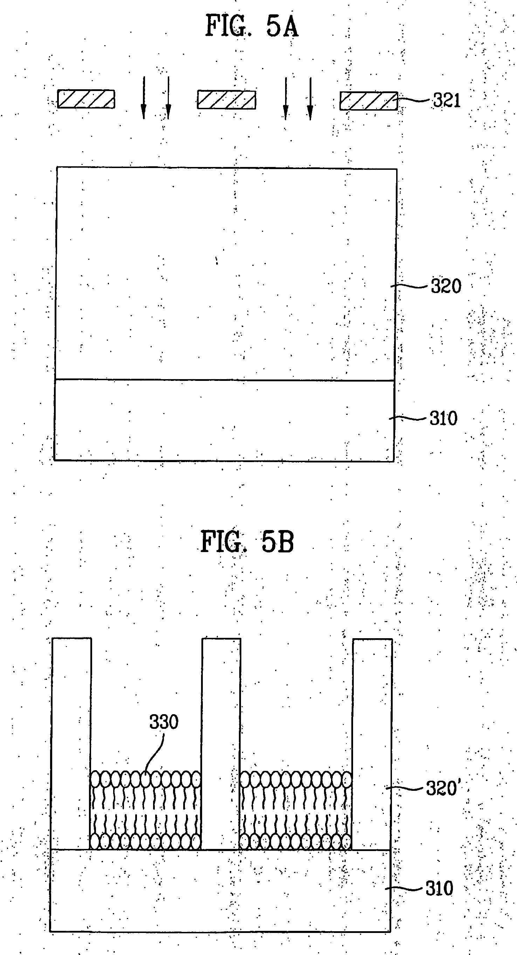

FIGS. 5A to 5D illustrate sections showing the steps of a third method for fabricating a water purifying filter of aquaporin.

Referring to FIG. 5A, the steps of the third method for fabricating a water purifying filter 300 include coating a polymer substance 320 on a support substrate 310, positioning a mask 321 on the polymer substance 320, and subjecting the support substrate 310 to exposure and development to form polymer pattern 320' having at least one intaglio in the polymer substance 320. Though not shown in FIG. 5A, the polymer pattern 320 may be formed by molding.

The support substrate 310 can be constructed of an ultrafiltration or microfiltration containing a polymer group substance such as polysulfone or Teflon having pores, or formed of ceramic, metal, carbon and so on other than the polymer group.

The intaglio may be of a two dimensional hole or one dimensional grid pattern. In this instance, if the intaglio has the two dimensional hole pattern, an interval of the intaglio can be 20nm to 10µm, and the hole may have a size of 5 to 200nm. The polymer pattern 320 of the third embodiment has a height formed greater than the height in the first or second embodiment. That is, if the intaglio is of the one dimensional grid pattern, the intaglio can have a step of 40nm to 1000µm.

Then, referring to FIG. 5B, a lipid bi-layer 330 or a block copolymer 330 is coated in the intaglio. FIG. 5B illustrates the lipid bi-layer 330 coated in the intaglio. In this instance, the coating of the lipid bi-layer 330 or the block copolymer 330 is to be below a surface of the polymer pattern 320'.

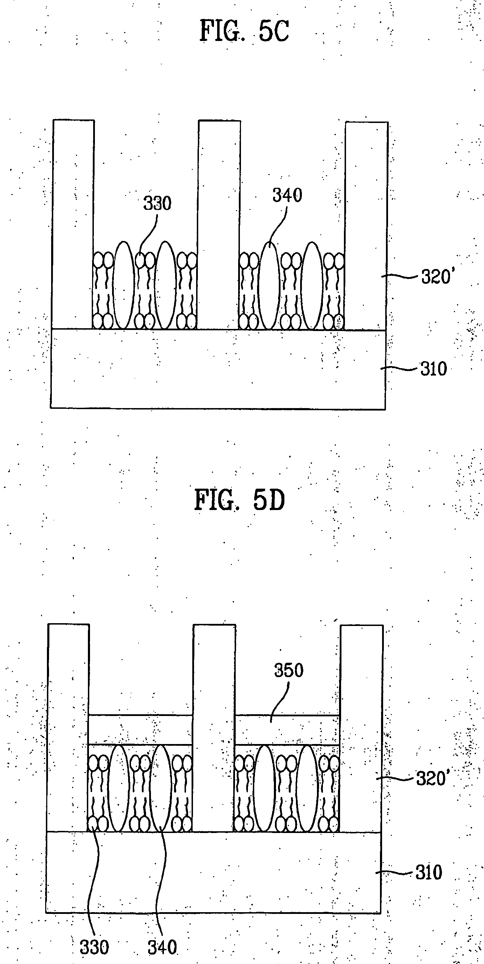

Next, referring to FIG. 5C, the aquaporin 340 is coated in the intaglio having the lipid bi-layer 330 or the block copolymer 330 coated therein.

Finally, referring to FIG. 5D, a protective layer 350 of a hydrophilic polymer group is formed on the polymer pattern 320 having the aquaporin 340 coated thereon.

Thus, the third method can shorten a fabrication process time period by injecting the aquaporin 340 into the intaglio after coating the lipid bi-layer or the block copolymer 330 in the intaglio in the polymer pattern 320 instead of incorporation of the aquaporin vesicles 130 in the lipid bi-layer or block copolymer in the first embodiment.

By forming the height of the polymer pattern 320 higher than the same in the first or second method, the water purifying filter of the third method can induce anti-fouling.

Though FIGS. 5A to 5D illustrate only one layer formed in the polymer pattern, two or more than two layers can be formed by the same method and in the same type if required. Moreover, concentration of the vesicles in each of the layers may different from each other. That is, an upper layer of may be formed coarse, and a lower layer may be formed dense, or vice versa.

### <FOURTH METHOD>

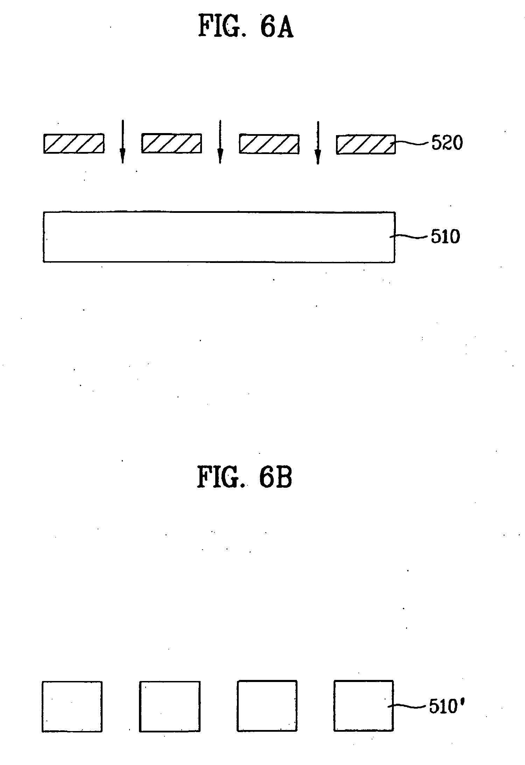

FIGS. 6A to 6D illustrate sections showing the steps of a fourth method for fabricating a water purifying filter of aquaporin.

Referring to FIGS. 6A and 6B, the steps of the fourth method for fabricating the water purifying filter 500 include positioning of a mask 520 on a support substrate 510 over a permeable membrane which can pass water, and subjecting the support substrate 510 to exposure and development to form the support substrate 510' having at least one hole.

The support substrate 510 can be constructed of an ultrafiltration or microfilteration containing a polymer group substance such as polysulfone or Teflon having pores, or formed of ceramic, metal, carbon and so on other than the polymer group.

The hole may have a size of 10 to 200nm.

In the meantime, the permeable membrane may be constructed of non-woven fabric or may not be provided depending on cases.

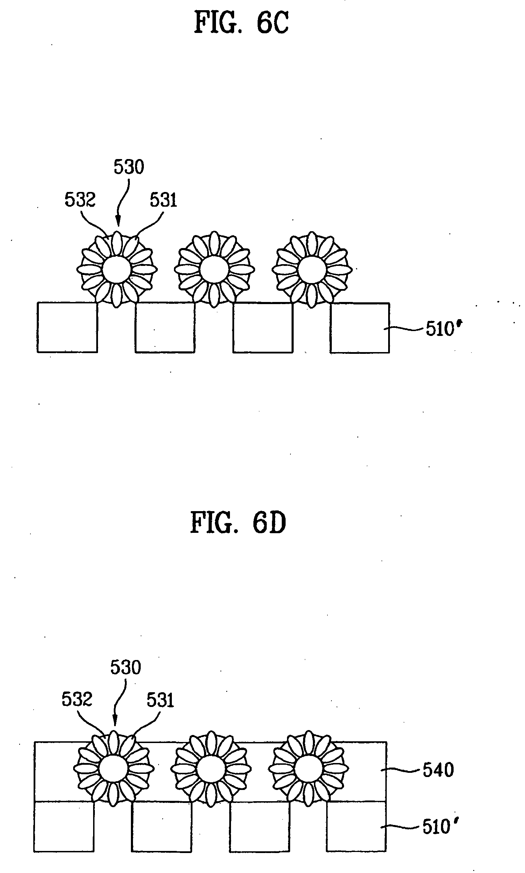

Then, referring to FIG. 6C, aquaporin vesicles 530 having aquaporin incorporated in a lipid bi-layer 532 or a block copolymer 532 are coated on the holes in the support substrate 510'. In this instance, the aquaporin vesicle 530 is formed greater than the hole in the support substrate 510' so that the aquaporin vesicle 530 does not sink in the support substrate 510'.

Finally, referring to FIG. 6D, a protective layer 540 of a hydrophilic polymer group is formed on the support substrate 510' including the aquaporin vesicles 530.

### <FIFTH METHOD>

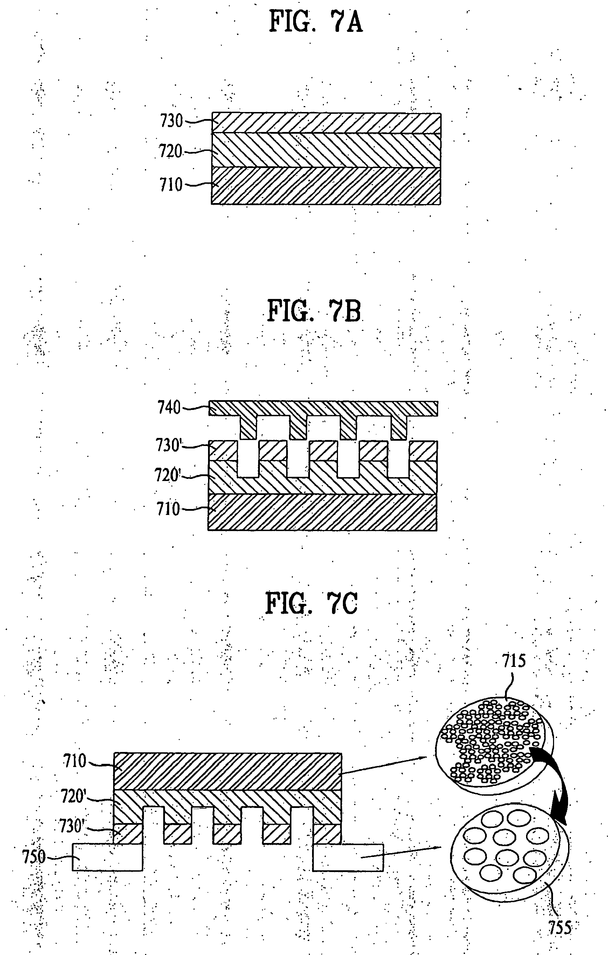

FIGS. 7A to 7I illustrate sections showing the steps of a fifth method for fabricating a water purifying filter of aquaporin. In description of FIGS. 7A to 7I, FIG. 3 will be referred.

In the fifth method, a case will be described in which a disk type module of aquaporin membranes is fabricated.

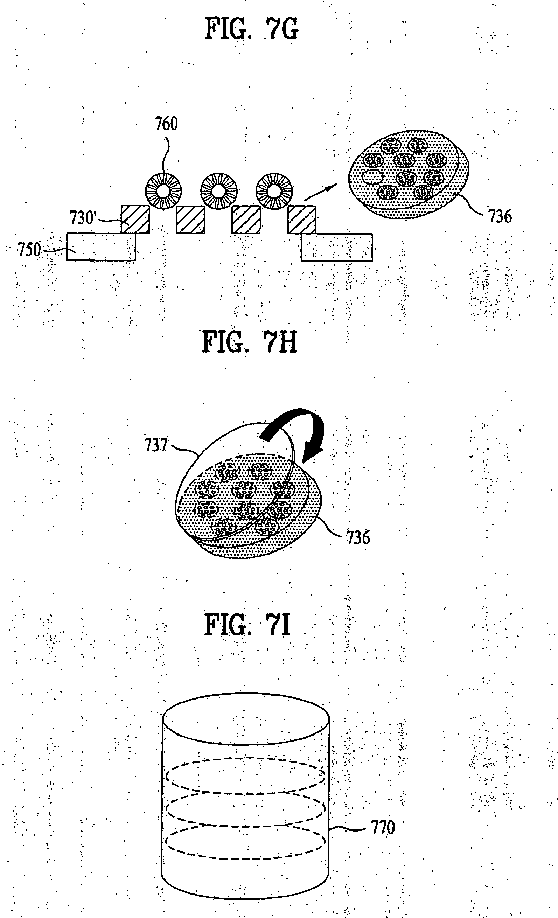

The steps (FIGS. 7A to 7I) of a method for forming the aquaporin membrane to be used in the disk type module, and the steps (FIG. 7I) of a method for fabricating the disk type module of aquaporin membranes will be described in succession, with reference to the drawings attached hereto.

FIG. 7A illustrates the step of coating a film on a first substrate 710. The film coating can be made two times. At first, a first film 720 is coated on the first substrate 710, and a second film 730 may be coated on the first film 720 coated thus. The first substrate 710 may be a PET (polyethylen terephthalate) substrate, and the first substrate 710 may have a surface treated with plasma before coated with the first film 720. The first film 720 may be a water soluble substance, for an example, a PVA (Polyvinyl alcohol) group polymer substance. The second film 730 may be an ultraviolet (UV)-curable substance.

FIG. 7B illustrates the step of forming a pattern on the film 720' and 730' coated on the first substrate 710 thus. In this instance, for convenience's sake, description of the pattern will be made taking the two dimensional hole pattern as an example. However, the pattern is not limited to the two dimensional hole pattern, but may be the one dimensional grid pattern or a three dimensional structure. In order to form a desired pattern, the pattern is formed, for an example, down to a predetermined depth of the first film 720', penetrating through the second film 730'. In this instance, the predetermined depth may be an extent of depth at which, for an example, the pattern does not penetrate through the first film 720', i.e., the pattern is not in contact with the first substrate 710 under the first film 720'. Moreover, one or more than one pattern can be formed at fixed intervals. With regard to the pattern, in general, a water channel has a size of a few nanometers nm to a few tens of micrometers µm. However, for convenience's sake, the specification will be described taking a case when the hole patterns are formed at 20 nm to 10 µm intervals as an example. In this instance, the hole may have a size of, for an example, 5 nm to 200 nm. If the pattern has a partition structure or one dimensional grid structure, the pattern may have a step of, for an example, 20 nm to 500 µm, and a line width of 10 µm to 250 µm. The hole pattern may be molded by using a mold 740. The mold 740 may be formed of, for an example, quartz, nickel, silicon oxide, and the like.

FIG. 7C illustrates the step of transcribing the hole pattern formed in the step of FIG. 7B to a second substrate 750. That is, the hole pattern formed in the step of FIG. 7B is adhered to the second substrate 750, and subjected to UV-curing, for transcribing. Different from the first substrate 710, the second substrate 750 can be a porous substrate 755.

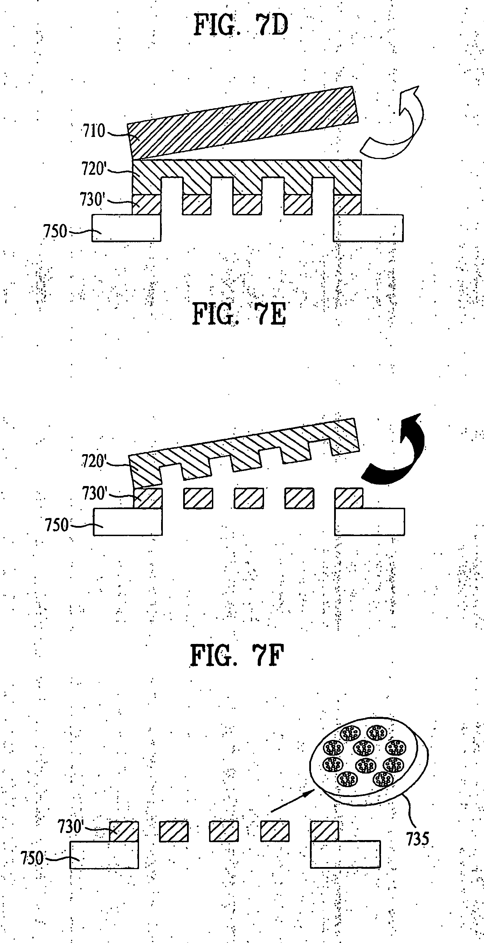

FIGS. 7D and 7E illustrate sections showing the steps of peeling off the first substrate 710 and the first film 720' in succession after the hole pattern transcription to the second substrate 750 is done, respectively. This is a step for remaining only a desired pattern. To do this, the first film 720' may be dissolved in water for separating and remaining a desired polymer pattern, i.e., the second film 730'.

FIG. 7F illustrates a section showing the step of forming an aquaporin securing pattern having the second substrate 750 and the second film 730' after removing the first substrate 710 and the first film 720'.

Thus, the aquaporin securing pattern is formed in the steps of FIGS. 7A to 7F by the disclosed polymer transcribing technology.

FIG. 7G illustrates sections showing the steps of coating aquaporin vesicles 760 on the aquaporin securing pattern formed in the foregoing steps, and securing the aquaporin vesicles 760 coated thus to the second film 730'. The aquaporin vesicle 760 coated on the second film 730' can have a structure, for an example, of FIG. 3. The membrane protein of the aquaporin group can be membrane protein selected from at least one of groups of the aquaporin 1 ~ 12, aquaporin-Z, and aquaporin-M. Moreover, as shown in FIG. 3, the aquaporin vesicle 330 is a vesicle having the aquaporin 331 incorporated in a lipid bi-layer 332, or a block copolymer 332. The block copolymer 332 is at least one of polymer groups selected from Poly (ethylene oxide), Poly (ethylene propylene), Poly (2-methyloxazoline), Poly (propylene sulfide), and Poly (dimethylsiloxane).

Referring to FIG. 7H, after securing the aquaporin vesicles 760 to the second film 730', a protective layer 737 is formed so that the aquaporin vesicles 760 do not move, thereby finishing formation of an aquaporin membrane 736.

FIG. 7I illustrates a perspective view of a cylindrical disk type water purifying filter 770 according to the fifth method, in which multiple layers of the aquaporin membranes formed in the steps of FIGS. 7A to 7H are arranged to form the cylindrical disk type water purifying filter 770, whereby permitting to have a secure and excellent water purifying effect.

### <SIXTH METHOD>

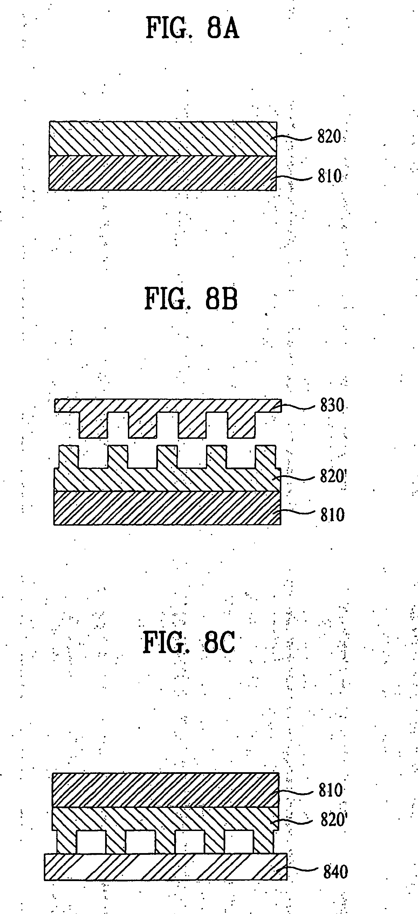

FIGS. 8A to 8G illustrate sections showing the steps of a sixth method for fabricating a water purifying filter of aquaporin.

In the sixth method, a case will be described in which a spiral type module of aquaporin membranes is fabricated.

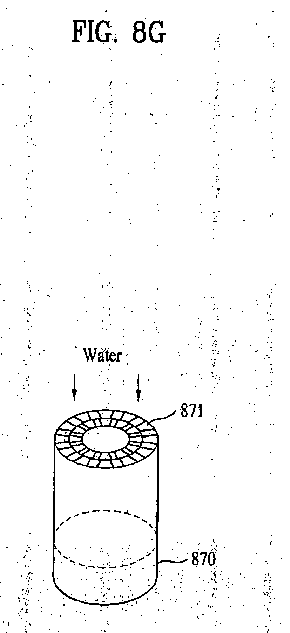

The steps (FIGS. 8A to 8F) of a method for forming the aquaporin membrane to be used in the spiral type module, and the steps (FIG. 8G) of a method for fabricating the spiral type module of aquaporin membranes will be described in succession, with reference to the drawings attached hereto.

FIG. 8A illustrates the step of coating a film 820 on a first substrate 810. The first substrate 810 may be a water soluble polymer substance, for an example, a PVA (Polyvinyl alcohol) group polymer substance. The film 820 may be an ultraviolet (UV)-curable polymer substance.

FIG. 8B illustrates the step of forming a pattern on the film 820 coated on the first substrate 810 thus. In this instance, for convenience's sake, description of the pattern will be made taking one dimensional grating pattern as an example. The pattern may have a size, for an example, the same with the aquaporin vesicle formed thus, or a few nanometers to a few tens of nanometers smaller than the aquaporin vesicle. However, the example is not limited to a pattern or a size of the pattern.

The one dimensional pattern may be molded by using a mold 830. The mold 830 may be formed of, for an example, quartz, nickel, and silicon oxide, and the like.

FIG. 8C illustrates the step of transcribing the one dimensional pattern to a second substrate 840. For convenience's sake, the second substrate 840 will be described, taking a flexible support substrate as an example.

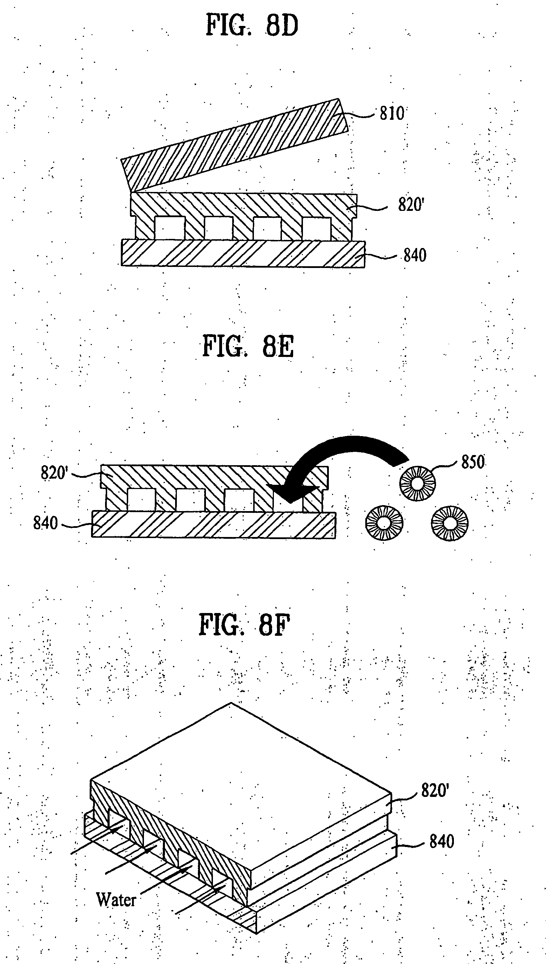

FIG. 8D illustrates a section showing the steps of peeling off the first substrate 810. This is a step for remaining only a desired pattern 820', i.e., only the film. To do this, since the first substrate 810 is soluble in water, the first substrate 810 can be removed by dissolving the first substrate 810 in water.

FIG. 8E illustrates a section showing the step of filling the aquaporin vesicles in a desired pattern 820', i.e., nano-channels formed thus. In the step, the aquaporin vesicles are filled in the channels.

FIG. 8F illustrates a perspective view showing the step of introducing water to, and purifying the water at, the membranes formed by the steps of up to the step of FIG. 8E.

FIG. 8G illustrates a perspective view of a spiral type water purifying filter 870 in accordance with the sixth method. The water flows from a top to a bottom, with a top view 871 identical to FIG. 8F if a direction of water flow is taken into consideration.

In this instance, by coating protective layers each having pores smaller than a size of the vesicle at opposite ends of the channel respectively, escape of the vesicles can be prevented.

Thus, the steps of formation of the membrane of the membrane protein of an aquaporin group and the steps of fabrication of the water purifying filter of the so-formed membrane have been described.

### <SEVENTH METHOD>

Next, the steps of forming a membrane of an SAM (Self Assembled Monolayer) substance and the steps of fabricating a water purifying filter of the so-formed membrane will be described.

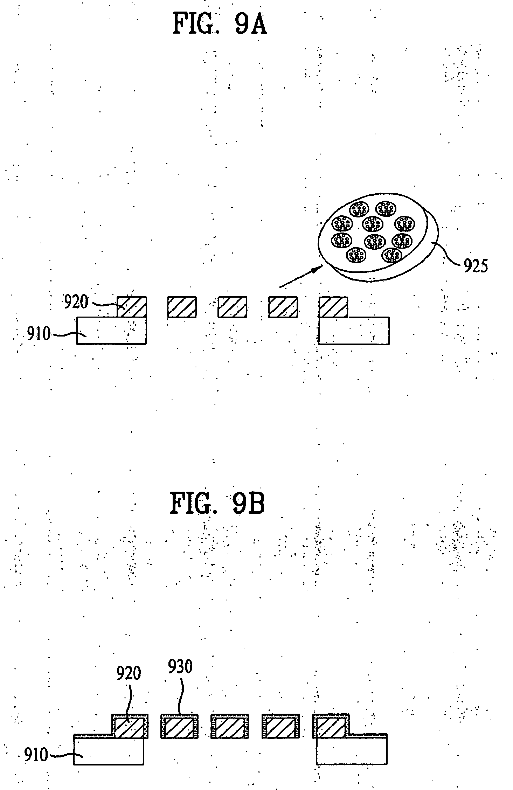

FIGS. 9A and 9B illustrate sections showing an example of the steps of a seventh method for fabricating a water purifying filter of an SAM substance.

FIG. 9A illustrates a section showing the step of transcribing a nano-pore pattern. However, the step of transcribing a nano-pore pattern is similar to the pattern shown in FIG. 7F. The description made with reference to FIGS. 7A to 7F is therefore invoked for the description of the steps of forming the nano-pore pattern with reference to FIG. 9A, and a detailed description with reference to FIG. 9A is omitted. However, the nano-pore pattern in FIG. 9A is not limited to FIG. 7A to 7F, but may be referred to any one of FIGS. 2A to 2C, FIGS. 4A to 4D, FIGS. 5A to 5D and FIGS. 6A to 6B.

FIG. 9B illustrates a section showing the step of an SAM surface treatment 830 made on a UV-cured polymer pattern 820 after transcribing the nano-pore pattern formed in the step of FIG. 9A.

The SAM substance formed on the nano-pore as shown in FIG. 9B react with heavy metals selectively, enabling to collect or filter the heavy metals. The SAM substance coated on the surface may be, for an example, Thiol-SAM, Chelate-SAM, Anion-SAM, and HOPO-SAM. The Thiol-SAM can capture heavy metals, for an example, mercury Hg, silver Ag, gold Au, copper Cu, and cadmium Cd, selectively. The Chelate-SAM can capture heavy metals, for an example, copper Cu, nickel Ni, cobalt Co, Zinc Zn, and lead Pb, selectively. The Anion-SAM can capture, for an example, chromate and Arsenate, selectively. The HOPO-SAM has selectivity on americium Am, neptunium Np, plutonium Pu, thorium Th, and uranium U.

Moreover, the seventh method can form a membrane in association with the fifth method, and can fabricate a water purifying filter of the membrane formed thus. Besides, each one of the methods can form a membrane in association with at least one of the other methods and can fabricate a water purifying filter of the membrane formed thus.

Thus, a water purifying filter and methods for fabricating the same have been described. As described, the water purifying filter of the present invention can improve endurance and an anti-fouling characteristic and can shorten a fabrication time period compared to the related art planar type filter by forming a customer tailored nano-membrane with a micro or nano pattern or SAM surface treatment on a surface of the filter, inducing that an entire water pressure is not applied to the water purifying filter, directly. Moreover, in comparison to the three dimensional structure, the water purifying filter of the present invention can reduce amounts of the aquaporin and the lipid bi-layer or the block copolymer to be used for fabrication of the water purifying filter, and has a short moving passage to increase the permeation rate of the water, too. And, in comparison to the nano-pore membrane formed by the related art semiconductor fabrication process, the present invention permits to obtain a low cost membrane, and increase endurance by applying the present invention to the aquaporin membrane. Eventually, the water purifying filter of the present invention can be applied to water treatment in general, starting from a domestic water purifier to a desalination plant, and to power generation system, such as the Pressure Retarded Osmosis PRO.

As has been described, the water purifying filter and the method for fabricating the same have the following advantages. First, selective passage of only water can be made at a high permeation rate and a high salt removal ratio even at a low pressure. Second, the application of the polymer pattern transcribing technology to formation of the membrane for the water purifying filter enables to form the nano-membrane, easily. Third, the membrane formed of the membrane protein of the aquaporin group or the SAM substance enables to enhance a water purifying effect, further. Fourth, the water purifying filter can be fabricated adaptively by forming various types of membrane modules.

## Claims

1. A water purifying filter comprising:
a support substrate (110);
a pattern layer (120') formed on the support substrate (110), the pattern layer having at least one hole, wherein the hole has a slope such that the hole has a shape with a smaller bottom side and a greater upper side and wherein an aquaporin vesicle (130) is provided in the hole; and
a protective layer (140) provided over the pattern layer (120') having the aquaporin vesicle in the hole;
**characterized in that** the aquaporin vesicle (130) includes a plurality of aquaporins incorporated in a lipid bi-layer (132) or a block copolymer (132), wherein the aquaporin vesicle (130) is greater than the bottom side of the hole.

2. The water purifying filter as claimed in claim 1, wherein the support substrate (110) is formed from one of an ultrafiltration membrane and a microfiltration membrane.

3. The water purifying filter as claimed in claim 1, wherein the protective layer (140) is formed of a hydrophilic polymer.

4. The water purifying filter as claimed in claim 1, wherein the block copolymer can be at least one polymer group selected from Poly (ethylene oxide), Poly (ethylene propylene), Poly (2-methyloxazoline), Poly (propylene sulfide) and Poly (dimethylsiloxane).

5. The water purifying filter as claimed in claim 1, wherein the aquaporin is selected from one of aquaporin 1 to aquaporin 12, aquaporin-Z, and aquaporin-M.

6. The water purifying filter as claimed in claim 2, wherein the support substrate (110) contains any one of a polymer group substance such as polysulfone or Teflon having pores, and formed of any one of ceramic, metal and carbon other than the polymer group.

7. A method for fabricating a water purifying filter, the method comprising:
forming a support substrate (110);
forming a pattern layer (120') on the support substrate to have at least one hole, wherein the hole has a slope that the hole has a shape with a smaller bottom side and a greater upper side;
depositing an aquaporin vesicle (130) in the hole; and
forming a protective layer (140) on the pattern layer (120') having the aquaporin vesicle (130) deposited in the hole;
**characterized in that** the pattern layer (120) is formed by using a mask (121) or a mold and that the aquaporin vesicle (130) includes a plurality of aquaporins incorporated in a lipid bi-layer (132) or a block copolymer (132), wherein the aquaporin vesicle (130) is greater than the bottom side of the hole.

8. The method as claimed in claim 7, wherein the support substrate (110) is formed from one of an ultrafiltration membrane and a microfiltration membrane.

9. The method as claimed in claim 7, wherein the protective layer (140) is formed of a hydrophilic polymer.

10. The method as claimed in claim 7, wherein the block copolymer is at least one polymer group selected from Poly (ethylene oxide), Poly (ethylene propylene), Poly (2-methyloxazoline), Poly (propylene sulfide) and Poly (dimethylsiloxane).

11. The method as claimed in claim 7, wherein the aquaporin is selected from one of aquaporin 1 to aquaporin 12, aquaporin-Z, and aquaporin-M.

12. The method as claimed in claim 8, wherein the support substrate (110) contains any one of a polymer group substance such as polysulfone or Teflon having pores, and formed of any one of ceramic, metal and carbon other than the polymer group.

## Patentansprüche

1. Wasserreinigungsfilter, umfassend:
ein Trägersubstrat (110),
eine Musterschicht (120'), welche auf dem Trägersubstrat (110) gebildet ist, wobei die Musterschicht wenigstens ein Loch aufweist, wobei das Loch eine Schräge besitzt,
sodass das Loch eine Form mit einer kleineren Unterseite und einer größeren Oberseite besitzt, und wobei ein Aquaporin-Vesikel (130) in dem Loch vorgesehen ist, und
eine Schutzschicht (140), welche über der Musterschicht (120') vorgesehen ist,
welche das Aquaporin-Vesikel in dem Loch aufweist,
**dadurch gekennzeichnet, dass** das Aquaporin-Vesikel (130) eine Mehrzahl Aquaporine umfasst, welche in eine Doppellipidschicht (132) oder ein Blockcopolymer (132) eingebaut sind, wobei das Aquaporin-Vesikel (130) größer als die Unterseite des Lochs ist.

2. Wasserreinigungsfilter nach Anspruch 1, wobei das Trägersubstrat (110) von einer Ultrafiltrationsmembran oder einer Mikrofiltrationsmembran gebildet ist.

3. Wasserreinigungsfilter nach Anspruch 1, wobei die Schutzschicht (140) von einem hydrophilen Polymer gebildet ist.

4. Wasserreinigungsfilter nach Anspruch 1, wobei das Blockcopolymer wenigstens eine Polymergruppe sein kann, die ausgewählt ist aus Poly (ethylenoxid), Poly (ethylenpropylen), Poly (2-methyloxazolin), Poly (propylensulfid) und Poly (dimethylsiloxan).

5. Wasserreinigungsfilter nach Anspruch 1, wobei das Aquaporin gewählt ist aus Aquaporin 1 bis Aquaporin 12, Aquaporin-Z und Aquaporin-M.

6. Wasserreinigungsfilter nach Anspruch 2, wobei das Trägersubstrat (110) eine Polymergruppensubstanz wie etwa Polysulfon oder Teflon mit Poren enthält und aus Keramik, Metall oder einem anderen Kohlenstoff als die Polymergruppe gebildet ist.

7. Verfahren zum Herstellen eines Wasserreinigungsfilters, wobei das Verfahren umfasst:
Bilden eines Trägersubstrats (110),
Bilden einer Musterschicht (120') auf dem Trägersubstrat, sodass sie wenigstens ein Loch aufweist, wobei das Loch eine Schräge besitzt, sodass das Loch eine Form mit einer kleineren Unterseite und einer größeren Oberseite besitzt,
Ablagern eines Aquaporin-Vesikels (130) in dem Loch und
Bilden einer Schutzschicht (140) auf der Musterschicht (120'), welche das Aquaporin-Vesikel (130) in dem Loch abgelagert aufweist,
**dadurch gekennzeichnet, dass** die Musterschicht (120) unter Verwendung einer Maske (121) oder einer Form gebildet wird und dass das Aquaporin-Vesikel (130) eine Mehrzahl Aquaporine umfasst, welche in eine Doppellipidschicht (132) oder ein Blockcopolymer (132) eingebaut sind, wobei das Aquaporin-Vesikel (130) größer als die Unterseite des Lochs ist.

8. Verfahren nach Anspruch 7, wobei das Trägersubstrat (110) von einer Ultrafiltrationsmembran oder einer Mikrofiltrationsmembran gebildet ist.

9. Verfahren nach Anspruch 7, wobei die Schutzschicht (140) von einem hydrophilen Polymer gebildet ist.

10. Verfahren nach Anspruch 7, wobei das Blockcopolymer wenigstens eine Polymergruppe ist, die gewählt ist aus Poly (ethylenoxid), Poly (ethylenpropylen), Poly (2-methyloxazolin), Poly (propylensulfid) und Poly (dimethylsiloxan).

11. Verfahren nach Anspruch 7, wobei das Aquaporin gewählt ist aus Aquaporin 1 bis Aquaporin 12, Aquaporin-Z und Aquaporin-M.

12. Verfahren nach Anspruch 7, wobei das Trägersubstrat (110) eine Polymergruppensubstanz wie etwa Polysulfon oder Teflon mit Poren enthält und aus Keramik, Metall oder einem anderen Kohlenstoff als die Polymergruppe gebildet ist.

## Revendications

1. Filtre de purification d'eau comprenant :
un substrat support (110) ;
une couche (120') à motifs formée sur le substrat support (110), la couche à motifs ayant au moins un trou, dans lequel le trou a une pente, de telle sorte que le trou a une forme avec un côté de fond plus petit et un côté supérieur plus grand et dans lequel une vésicule d'aquaporines (130) est prévue dans le trou ; et
une couche de protection (140) prévue par-dessus la couche (120') à motifs ayant la vésicule d'aquaporines dans le trou ;
**caractérisé en ce que** la vésicule d'aquaporines (130) inclut une pluralité d'aquaporines incorporées dans une bicouche lipidique (132) ou un copolymère à blocs (132), dans lequel la vésicule d'aquaporines (130) est plus grande que le côté de fond du trou.

2. Filtre de purification d'eau selon la revendication 1, dans lequel le substrat support (110) est constitué d'une parmi une membrane d'ultrafiltration et une membrane de microfiltration.

3. Filtre de purification d'eau selon la revendication 1, dans lequel la couche de protection (140) est constituée d'un polymère hydrophile.

4. Filtre de purification d'eau selon la revendication 1, dans lequel le copolymère à blocs peut être au moins un groupe polymère choisi parmi un poly(oxyde d'éthylène), un poly(éthylène-propylène), une poly(2-méthyloxazoline), un poly(sulfure de propylène) et un poly(diméthylsiloxane).

5. Filtre de purification d'eau selon la revendication 1, dans lequel l'aquaporine est choisie parmi une de l'aquaporine 1 à l'aquaporine 12, l'aquaporine Z et l'aquaporine M.

6. Filtre de purification d'eau selon la revendication 2, dans lequel le substrat support (110) contient une quelconque parmi une substance d'un groupe polymère telle qu'une polysulfone ou un Téflon ayant des pores, et constituée d'un quelconque parmi une céramique, un métal et un carbone autre que le groupe polymère.

7. Procédé de fabrication d'un filtre de purification d'eau, le procédé comprenant :
la formation d'un substrat support (110) ;
la formation d'une couche (120') à motifs sur le substrat support de façon à avoir au moins un trou, dans lequel le trou a une pente, de telle sorte que le trou a une forme avec un côté de fond plus petit et un côté supérieur plus grand ;
le dépôt d'une vésicule d'aquaporines (130) dans le trou ; et
la formation d'une couche de protection (140) sur la couche (120') à motifs ayant la vésicule d'aquaporines (130) déposée dans le trou ;
**caractérisé en ce que** la couche (120) à motifs est formée en utilisant un masque (121) ou un moule et **en ce que** la vésicule d'aquaporines (130) inclut une pluralité d'aquaporines incorporées dans une bicouche lipidique (132) ou un copolymère à blocs (132), dans lequel la vésicule d'aquaporines (130) est plus grande que le côté de fond du trou.

8. Procédé selon la revendication 7, dans lequel le substrat support (110) est constitué d'une parmi une membrane d'ultrafiltration et une membrane de microfiltration.

9. Procédé selon la revendication 7, dans lequel la couche de protection (140) est constituée d'un polymère hydrophile.

10. Procédé selon la revendication 7, dans lequel le copolymère à blocs est au moins un groupe polymère choisi parmi un poly(oxyde d'éthylène), un poly(éthylène-propylène), une poly(2-méthyloxazoline), un poly(sulfure de propylène) et un poly(diméthylsiloxane).

11. Procédé selon la revendication 7, dans lequel l'aquaporine est choisie parmi une de l'aquaporine 1 à l'aquaporine 12, l'aquaporine Z et l'aquaporine M.

12. Procédé selon la revendication 8, dans lequel le substrat support (110) contient une quelconque parmi une substance d'un groupe polymère telle qu'une polysulfone ou un Téflon ayant des pores, et constituée d'un quelconque parmi une céramique, un métal et un carbone autre que le groupe polymère.
